# EUROPEAN PATENT APPLICATION

(11) **EP 4 286 993 A1**
(43) Date of publication of application: **06.12.2023**
(21) Application number: 22745991.4
(22) Date of filing: 27.01.2022
(51) Int. Cl.: G06F 3/01

(54) **INFORMATION PROCESSING METHOD, INFORMATION PROCESSING DEVICE, AND NON-VOLATILE STORAGE MEDIUM**

(30) Priority: 28.01.2021 CN 202110118481
(71) Applicant: Sony Semiconductor Solutions Corporation, Atsugi-shi, Kanagawa 243-0014 (JP)
(72) Inventor: DOI, Hiromasa, Atsugi-shi, Kanagawa 243-0014 (JP); NAKAGAWA, Takaaki, Shenzhen, Guangdong 518031 (CN); WANG, Guangyu, Beijing 100028 (CN)
(74) Representative: MFG Patentanwälte Meyer-Wildhagen Meggle-Freund Gerhard PartG mbB
(86) International application number: PCT/JP2022/003156
(87) International publication number: WO 2022/163772

(57) **Abstract**

An information processing method includes position information detection processing, effect processing, and display processing. The position information detection processing performs detection of distance information of a real object based on depth data acquired by a ToF sensor (30). The effect processing performs occlusion processing of a real object and an AR object generated by the CG based on the detected distance information of the real object. The display processing displays a result of the occlusion processing on a display (50) .

## Description

### Field

The present invention relates to an information processing method, an information processing device, and a non-volatile storage medium.

### Background

There is a known technique of applying an effect to a photograph or a moving image using an augmented reality (AR) technique. For example, an AR object generated by computer graphics (CG) is superimposed on a video image of a real object captured by a camera. This technique generates a video image that can give a feeling of being in another dimension.

### Citation List

### Patent Literature

Patent Literature 1: US 2020326830 A1

### Summary

### Technical Problem

Generating a video image that maintains realism requires an accurate positional relationship between a real object and an AR object. Occurrence of deviation of application position of an effect can give the viewer a sense of incompatibility.

In view of this, the present disclosure proposes an information processing method, an information processing device, and a non-volatile storage medium capable of appropriately applying an effect.

### Solution to Problem

According to the present disclosure, an information processing method to be executed by a computer is provided that comprises: detecting distance information of a real object based on depth data acquired by a ToF sensor; performing occlusion processing on the real object and an AR object generated by CG based on the distance information of the real object detected; and displaying a result of the occlusion processing on a display. According to the present disclosure, an information processing device that executes an information process of the information processing method, and a non-volatile storage medium storing a program that causes a computer to execute the information process are provided.

### Brief Description of Drawings

FIG. 1 is a diagram illustrating a schematic configuration of an information processing device.
FIG. 2 is a diagram illustrating a functional block diagram of an information processing device.
FIG. 3 is a diagram illustrating an example of an effect.
FIG. 4 is a diagram illustrating another example of effect processing.
FIG. 5 is a diagram illustrating another example of effect processing.
FIG. 6 is a diagram illustrating an example of a method of detecting a trigger.
FIG. 7 is a diagram illustrating an example of a method of detecting a trigger.
FIG. 8 is a diagram illustrating an example of a gesture detected by a motion detection unit.
FIG. 9 is a diagram illustrating an example of information processing performed by the information processing device.
FIG. 10 is a diagram illustrating an example of information processing performed by the information processing device.
FIG. 11 is a diagram illustrating another example of information processing performed by the information processing device.
FIG. 12 is a diagram illustrating another example of information processing performed by the information processing device.
FIG. 13 is a diagram illustrating a modification of information processing.
FIG. 14 is a diagram illustrating a modification of information processing.
FIG. 15 is a diagram illustrating another example of information processing performed by the information processing device.
FIG. 16 is a diagram illustrating an example of a hardware configuration of the information processing device.

### Description of Embodiments

Embodiments of the present disclosure will be described below in detail with reference to the drawings. In each of the following embodiments, the same parts are denoted by the same reference symbols, and a repetitive description thereof will be omitted.

Note that the description will be given in the following order.
[1. Configuration of information processing device]
[2. Information processing method]
   [2-1. Processing example 1]
   [2-2. Processing example 2]
   [2-3. Other processing examples]
[3. Hardware configuration example]
[4. Effects]

### [1. Configuration of information processing device]

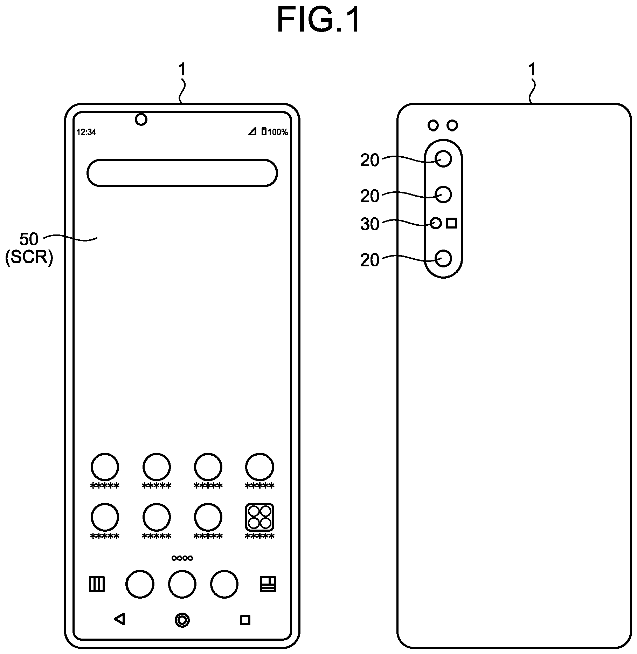

FIG. 1 is a diagram illustrating a schematic configuration of an information processing device 1.

The information processing device 1 is an electronic device that processes various types of information such as photographs and moving images. The information processing device 1 includes a display 50 on its front side, and includes a time of flight (ToF) sensor 30 and a camera 20 on its back side, for example.

The camera 20 is, for example, a multiple lens camera capable of switching among ultra-wide angle, wide angle, and telephoto imaging. The ToF sensor 30 is, for example, a distance image sensor that detects distance information (depth information) for each pixel. The distance measurement method may be either direct ToF (dToF) or indirect ToF (iToF). As a method of detecting distance information, it is allowable to use only data of the ToF sensor 30, use output data of the ToF sensor 30 and the camera 20 to perform detection, or use an artificial intelligence (AI) technology to calculate distance information from the data of the camera 30.

The display 50 is implemented by using a known display such as a liquid crystal display (LCD) or an organic light emitting diode (OLED). The display 50 includes, for example, a screen SCR, which is a touch-operable screen.

FIG. 1 illustrates a smartphone as an example of the information processing device 1, but the information processing device 1 is not limited to the smartphone. The information processing device 1 may be a tablet terminal, a laptop computer, a desktop computer, a digital camera, or the like.

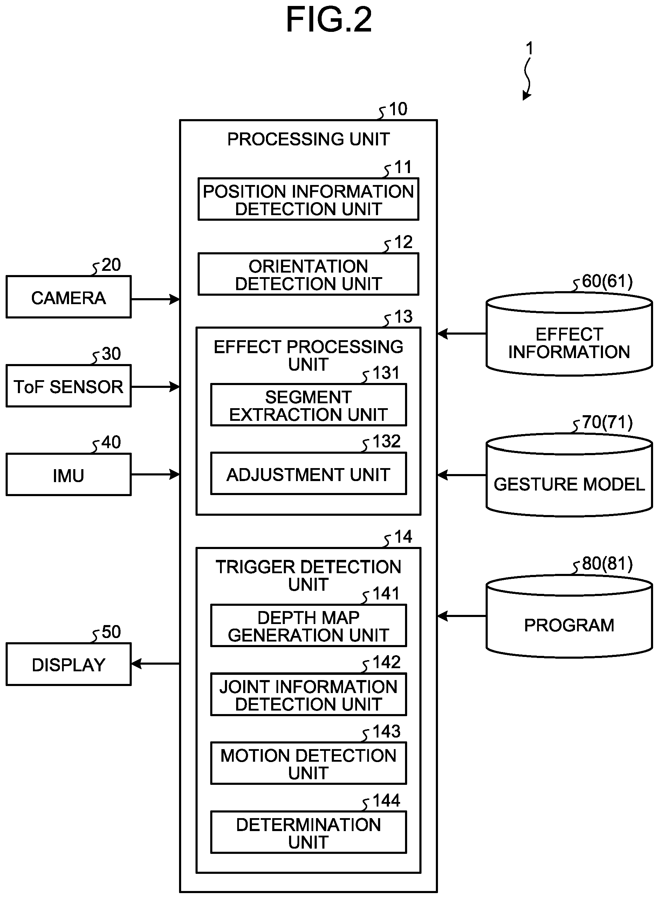

FIG. 2 is a diagram illustrating a functional block diagram of the information processing device 1.

The information processing device 1 includes, for example, a processing unit 10, a camera 20, a ToF sensor 30, an inertial measurement unit (IMU) 40, a display 50, an effect information storage unit 60, a gesture model storage unit 70, and a program storage unit 80.

The processing unit 10 applies an effect to a video image of the camera 20 based on the measurement data of the ToF sensor 30 and the IMU 40. The processing unit 10 includes, for example, a position information detection unit 11, an orientation detection unit 12, an effect processing unit 13, and a trigger detection unit 14.

The position information detection unit 11 acquires depth data measured by the ToF sensor 30. The depth data includes depth information for each pixel. The position information detection unit 11 detects distance information of a real object existing in the real space based on the depth data.

The orientation detection unit 12 acquires video image data of the camera 20 and IMU data measured by the IMU 40. The video image data includes data of a photograph and a moving image. The IMU data includes information related to three-dimensional angular velocity and acceleration. The orientation detection unit 12 detects the orientation of the camera 20 using the video image data and the IMU data. The orientation information related to the orientation of the camera 20 is detected using a known method such as simultaneous localization and mapping (SLAM).

Note that, in the present disclosure, the orientation information is detected using the video image data and the IMU data, but the method of detecting the orientation information is not limited thereto. The orientation information is detectable with acceleration data of the camera 20. Accordingly, the orientation detection unit 12 can detect the orientation of the camera 20 using information including at least acceleration data. By fusing the acceleration data and other sensor information, it is possible to detect orientation information with high accuracy. Therefore, the present disclosure detects the orientation information of the camera 20 using such a sensor fusion method.

The effect processing unit 13 applies an effect to the video image captured by the camera 20. Various types of information regarding the effect, such as the content of the effect and the position to which the effect is applied, are stored in the effect information storage unit 60 as effect information 61. The effect processing unit 13 performs effect processing based on the effect information 61.

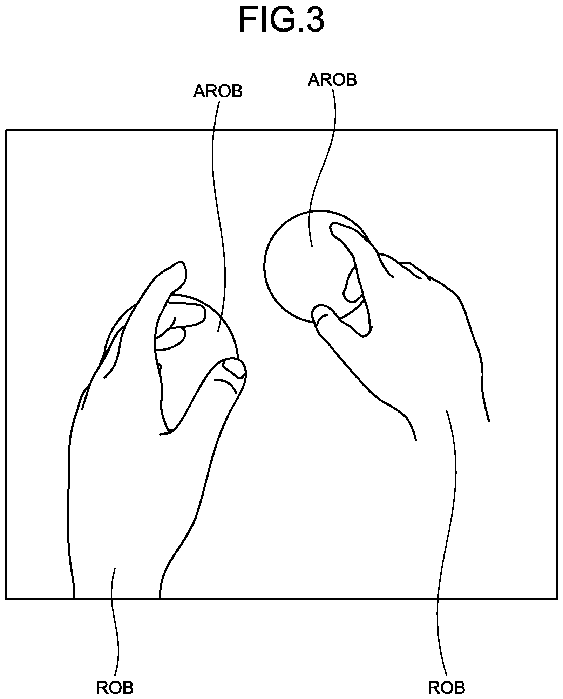

FIG. 3 is a diagram illustrating an example of an effect.

The effect processing is performed using an AR object AROB generated by CG, for example. In the example of FIG. 3, a plurality of AR objects AROB each having a spherical shape is displayed to be superimposed on a real object ROB. The effect processing unit 13 detects the positional relationship between the real object ROB and the AR object AROB based on distance information of the real object ROB detected. The effect processing unit 13 performs occlusion processing on the real object ROB by the AR object AROB based on the positional relationship between the real object ROB and the AR object AROB. The display 50 displays a result of the occlusion processing.

Occlusion represents a state in which an object in the foreground hides an object at the back. Occlusion processing represents processing of detecting a foreground/background relationship between objects and superimposing the objects with each other while hiding an object in the back with an object in the front based on the foreground/background relationship detected. For example, in a case where the real object ROB is closer to the ToF sensor 30 than the AR object AROB is, the effect processing unit 13 performs occlusion processing of superimposing the real object ROB in front of the AR object AROB so that the AR object AROB is hidden behind the real object ROB. In a case where the AR object AROB is closer to the ToF sensor 30 than the real object ROB is, the effect processing unit 13 performs occlusion processing of superimposing the AR object AROB in front of the real object ROB so that the real object ROB is hidden behind the AR object AROB.

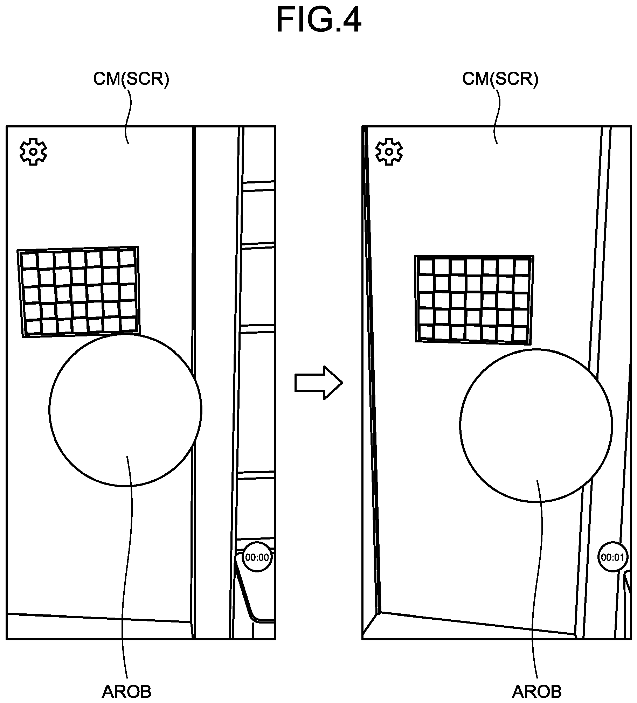

FIG. 4 is a diagram illustrating another example of the effect processing.

In the example of FIG. 4, a hole leading to another dimensional space is displayed as an AR object AROB. FIG. 4 illustrates a state in which there is deviation in a video image CM of the camera 20 due to camera shake. Based on the orientation of the camera 20, the effect processing unit 13 adjusts a position where an effect is applied to the video image CM so as not to cause a deviation between the video image CM and the AR object AROB.

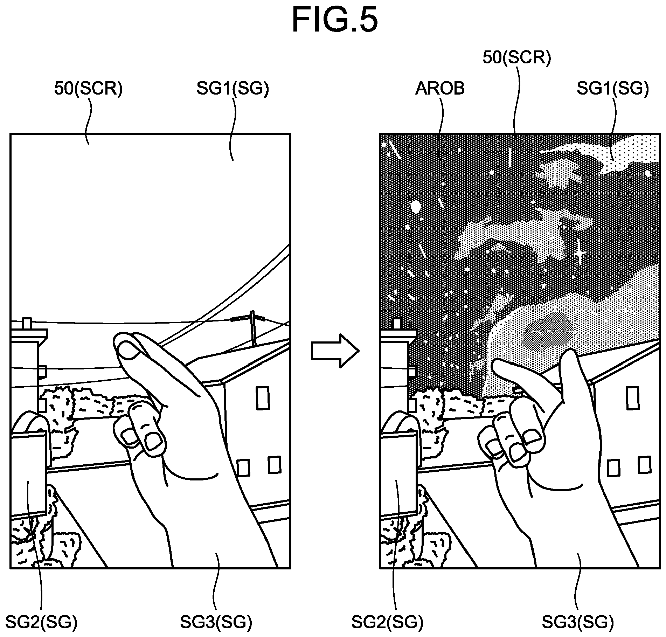

FIG. 5 is a diagram illustrating another example of the effect processing.

In the example of FIG. 5, the effect is selectively applied to a specific segment SG of the video image CM. For example, the video image CM of the camera 20 is divided into a first segment SG1 with a label "sky", a second segment SG2 with a label "building", and a third segment SG3 with a label "hand". The effect is selectively applied to the first segment SG1.

The deviation between the video image CM and the AR object AROB is easily recognized when the effect is selectively applied to a specific segment. For example, in a case where the effect is applied to the first segment SG1, the spread of application position of the effect to the second segment SG2 or the third segment SG3 due to the camera shake would lead to generation of an unnatural video image. Therefore, the effect processing unit 13 adjusts the application position of the effect in accordance with the deviation of the video image CM.

For example, as illustrated in FIG. 2, the effect processing unit 13 includes a segment extraction unit 131 and an adjustment unit 132. The segment extraction unit 131 extracts the segment SG corresponding to the label associated with the effect from the video image CM of the camera 20. The segment SG is extracted using a known method such as semantic segmentation. The adjustment unit 132 adjusts the application position of the effect according to the change in the orientation of the camera 20 so that the application position of the effect does not deviate from the extracted segment SG. For example, in a case where the video image CM has been shifted to the left due to the camera shake, the application position of the effect in the screen SCR is shifted to the left accordingly.

The trigger detection unit 14 detects a trigger for starting effect processing. The trigger may be any type of trigger. For example, when having detected a specific object (trigger object) or when the trigger object has performed a specific operation, the trigger detection unit 14 determines to have detected a trigger. The trigger object may be the real object ROB or the AR object AROB. The trigger is detected based on the depth data, for example. The trigger information regarding the object to be a trigger and the operation of the trigger is included in the effect information 61.

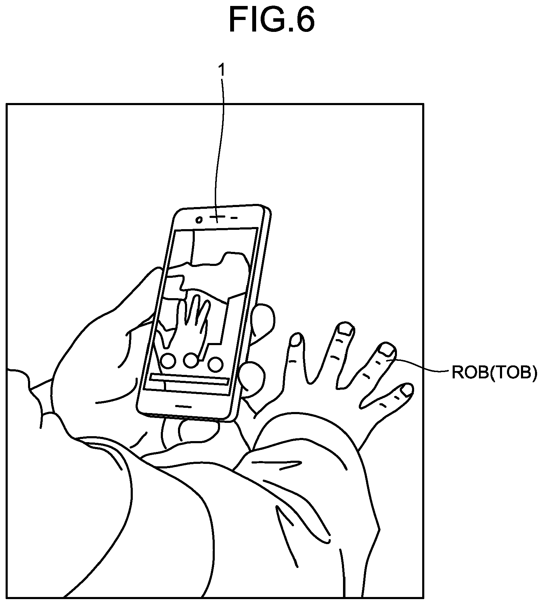

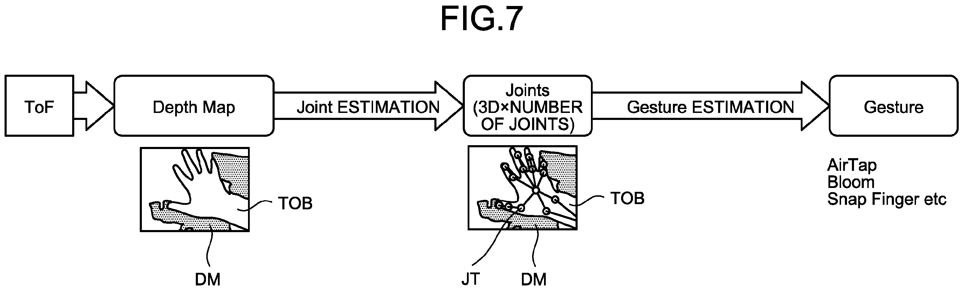

FIGS. 6 and 7 are diagrams illustrating an example of a method of detecting a trigger.

In the example of FIG. 6, a gesture made by a hand, a finger, or the like, is detected as a trigger. The trigger detection unit 14 detects the motion of the real object ROB such as a hand or a finger to be the trigger object TOB based on the depth data. Subsequently, the trigger detection unit 14 determines whether the motion of the trigger object TOB corresponds to the gesture to be the trigger.

For example, as illustrated in FIG. 2, the trigger detection unit 14 includes a depth map generation unit 141, a joint information detection unit 142, a motion detection unit 143, and a determination unit 144.

As illustrated in FIG. 7, the depth map generation unit 141 generates a depth map DM of the trigger object TOB. The depth map DM is an image in which a distance value (depth) is assigned to each pixel. The depth map generation unit 141 generates the depth map DM of the trigger object TOB at a plurality of time points using time-series depth data acquired from the ToF sensor 30.

The joint information detection unit 142 extracts joint information regarding the trigger object TOB at the plurality of time points based on the depth map DM at the plurality of time points. The joint information includes information related to the arrangement of the plurality of joints JT set as the trigger object TOB.

The portion to be the joint JT is set for each trigger object TOB. For example, in a case where the trigger object TOB is a human hand, portions to be set as the joint JT will be the center of the palm, the base of the thumb, the center of the thumb, the tip of the thumb, the center of the index finger, the tip of the index finger, the center of the middle finger, the tip of the middle finger, the center of the ring finger, the tip of the ring finger, the center of the little finger, the tip of the little finger, and two joints of the wrist. The joint information detection unit 142 extracts three-dimensional coordinate information of each joint JT as joint information.

Note that the portion to be the joint JT is not limited to the above. For example, it is also allowable to set, as the joint JT, only the following portions: the tip of the thumb, the tip of the index finger, the tip of the middle finger, the tip of the ring finger, the tip of the little finger, and two joints of the wrist. In addition to the 14 joints JT described above, it is also allowable to set, as the joints, other parts such as the base of the index finger, the base of the middle finger, the base of the ring finger, and the base of the little finger. By setting the number of joints JT close to the number of joints (21) of the hand, the gesture is accurately detected.

The motion detection unit 143 detects the motion of the trigger object TOB based on the joint information at a plurality of time points. For example, the motion detection unit 143 applies joint information at a plurality of time points to a gesture model 71. The gesture model 71 is an analytical model that has been trained to learn a relationship between time-series joint information and gestures using a Recurrent Neural Network (RNN), Long Short-Term Memory (LSTM), or the like. The gesture model 71 is stored in a gesture model storage unit 70. The motion detection unit 143 analyzes the motion of the trigger object TOB using the gesture model 71, and detects a gesture corresponding to the motion of the trigger object TOB based on a result of the analysis.

The determination unit 144 examines whether the gesture corresponding to the motion of the trigger object TOB matches the gesture defined in the effect information 61. With this matching, the determination unit 144 determines whether the motion of the trigger object TOB corresponds to the gesture to be a trigger.

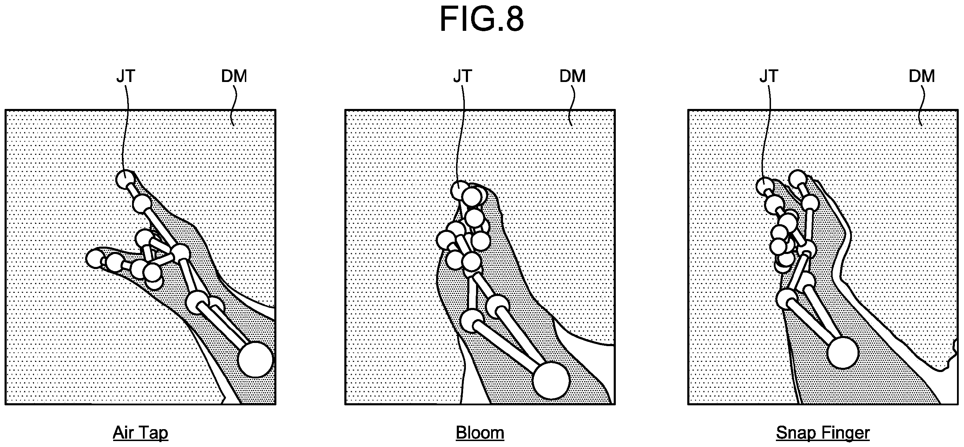

FIG. 8 is a diagram illustrating an example of a gesture detected by the motion detection unit 143.

FIG. 8 illustrates "Air Tap", "Bloom", and "Snap Finger" as an example of the gesture. "Air Tap" is a gesture of pointing an index finger straight up and tapping the index finger straight down. "Air Tap" corresponds to a click operation of a mouse and a tap operation on a touch panel. "Bloom" is a gesture of holding a hand with palm up and fingertips together, then open the hand by spreading fingers. "Bloom" is used to close an application or opening a start menu. "Snap Finger" is a gesture of snapping, by rubbing the thumb and the middle finger together, to make a sound. "Snap Finger" is used to start effect processing, for example.

Returning to FIG. 2, the program storage unit 80 stores a program 81 executed by the processing unit 10. The program 81 is a program that causes a computer to execute information processing according to the present disclosure. The processing unit 10 performs various processes in accordance with the program 81 stored in the program storage unit 80. The program storage unit 80 includes any non-transitory non-volatile storage medium such as a semiconductor storage medium and a magnetic storage medium, for example. The program storage unit 80 includes an optical disk, a magneto-optical disk, or flash memory, for example. The program 81 is stored in a computer-readable non-transitory storage medium, for example.

### [2. Information processing method]

### [2-1. Processing example 1]

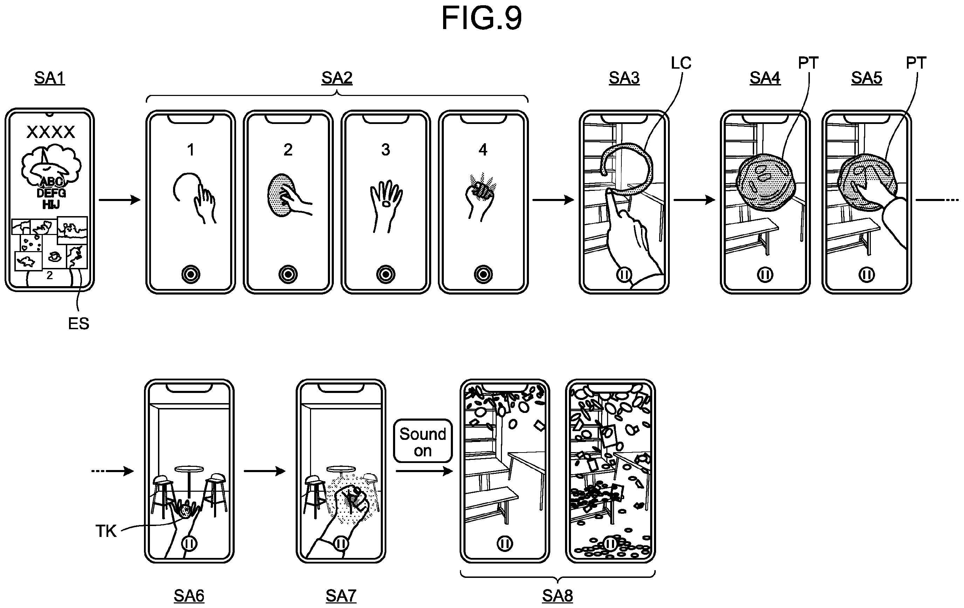

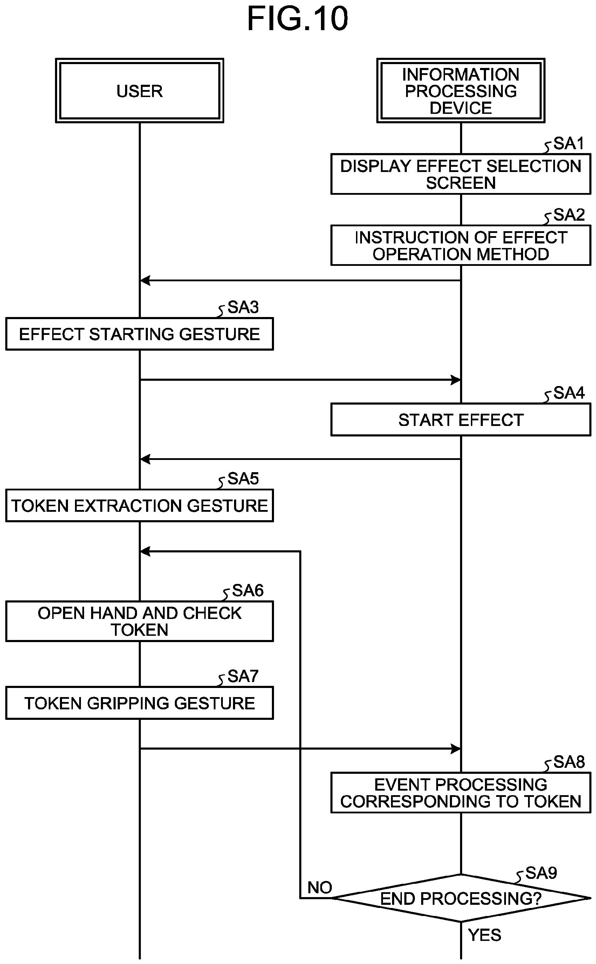

FIGS. 9 and 10 are diagrams illustrating an example of information processing performed by the information processing device 1. FIG. 10 is a diagram illustrating a processing flow, and FIG. 9 is a diagram illustrating display items for each step.

In Step SA1, the processing unit 10 displays an effect selection screen ES on the display 50. For example, the effect selection screen ES displays a list of effects. The user selects a desired effect from the list of effects.

In Step SA2, the processing unit 10 displays instructions on an effect operation method on the display 50. In the example of FIG. 9, the instructions given include that, for example, drawing a circle in the air with a finger will start effect processing, the circle serves as an entrance to another dimensional space, and firmly gripping a token taken out from the another dimensional space activates an event corresponding to the type of the token.

In Step SA3, the user makes a gesture of drawing a circle in the air in front of the camera 20. When having detected the gesture of drawing a circle in the air, the processing unit 10 starts processing of the effect in Step SA4. In the example of FIG. 9, a trajectory LC of the finger drawing the circle is displayed by a gold line. The inside of the circle is then filled in gold, and an entrance PT to another dimensional space pops up in the air.

In Step SA5, the user inserts a hand into the entrance PT. In Step SA6, the user extracts the token TK from another dimensional space. The user then places the extracted token TK on the palm and checks the type of the token TK that has been extracted. In Step SA7, the user firmly grips the token TK placed on the palm.

When having detected that the user has gripped the token TK, the processing unit 10 generates, in Step SA8, an event corresponding to the token TK. The example of FIG. 9 illustrates an occurrence of an event in which gold coins and red packs fall down from the ceiling. The clinking sound of coins is presented as a sound effect. The shower of coins and packs are scattered on the floor.

In Step SA9, the processing unit 10 determines the end of the effect. At detecting an end flag such as pressing of an effect end button, determination of the end of the effect is performed. In a case where it is determined in Step SA9 that the effect ends (Step SA9: Yes), the processing unit 10 ends the processing of the effect. In a case where it is not determined in Step SA9 that the effect ends (Step SA9: No), the processing returns to Step SA6, and the above-described processing is repeated until the end flag is detected.

### [2-2. Processing example 2]

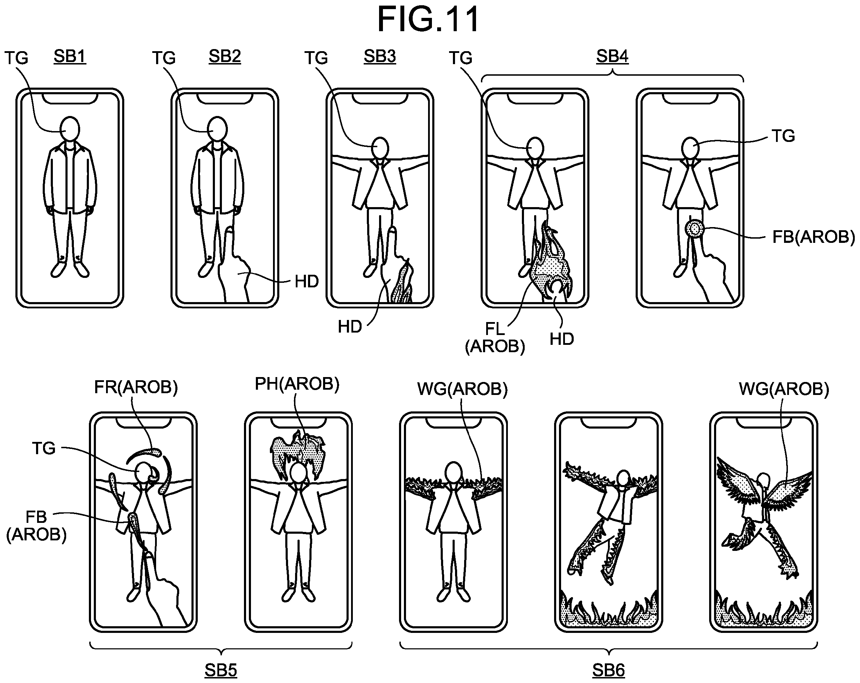

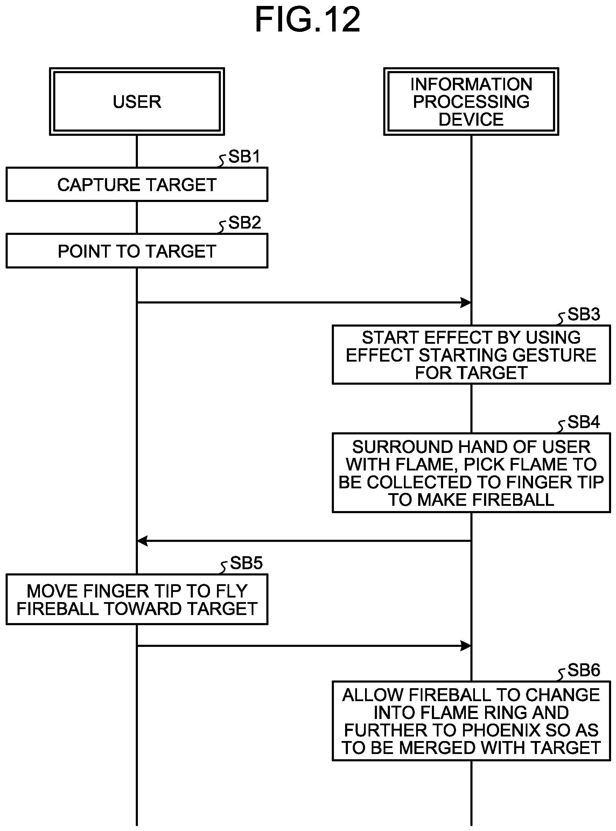

FIGS. 11 and 12 are diagrams illustrating another example of information processing performed by the information processing device 1. FIG. 12 is a diagram illustrating a processing flow, and FIG. 11 is a diagram illustrating display items for each step.

In Step SB1, the user captures a target TG, which is an application target of the effect, in the visual field of the camera 20. In Step SB2, the user points to the target TG in front of the camera 20. In Step SB3, the target TG performs a gesture for starting the effect processing. In the example of FIG. 11, an action including looking upward from the state of standing upright, spreading both hands, and standing still for a predetermined time is a gesture for starting the effect processing.

When having detected the gesture, the processing unit 10 starts effect processing. In the example of FIG. 11, an effect of making the target TG possessed by a Phoenix PH is applied.

First, in Step SB4, a hand HD of the user captured by the camera 20 is surrounded by flame FL. A flame FL surrounding the hand HD eventually moves to the tip of the finger pointing at the target TG, and becomes a fireball FB at the tip of the finger.

In Step SB5, the user moves the finger to fly the fireball FB toward the target TG. With this operation, a flame ring FR appears around the target TG, and the flame ring FR eventually changes its shape to the Phoenix PH.

In Step SB6, wings WG of the Phoenix PH are merged with the arms of the target TG, and the hip and the legs of the target TG are also engulfed in flames. Subsequently, the flame effect (AR object AROB) moves in accordance with the motion of the target TG. As necessary, the video image is processed such that the target TG floats in the air.

### [2-3. Other processing examples]

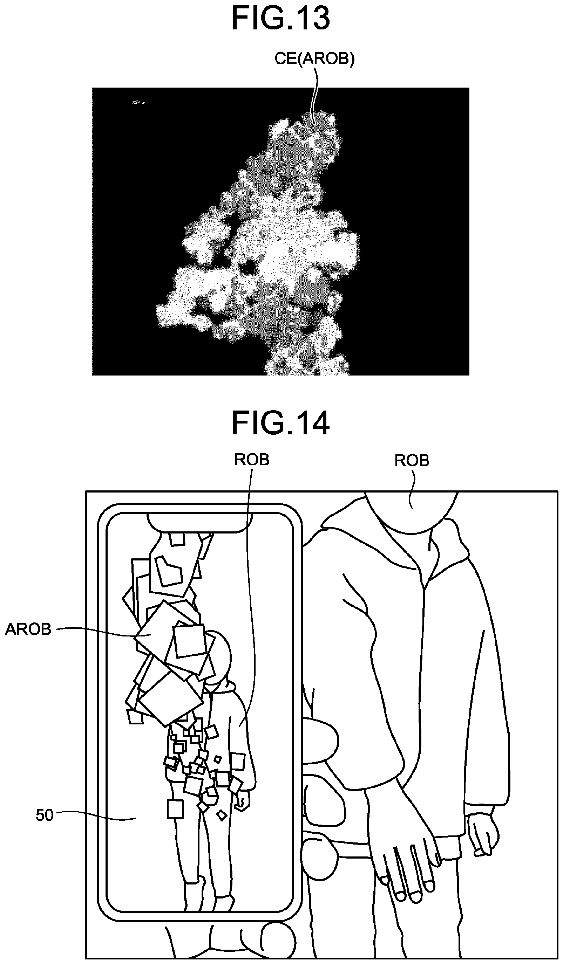

FIGS. 13 and 14 are diagrams illustrating another example of the effect.

FIG. 13 illustrates an effect of transforming a subject into a pattern. The subject is expressed as a combination of a plurality of color elements CE. Each of the color elements CE is to be the AR object AROB of the present disclosure. The size of each color element CE is determined based on the depth information of the subject. For example, the effect processing unit 13 generates point cloud data of the subject based on depth data. The point cloud data is coordinate data of each point included in the point cloud. The effect processing unit 13 classifies the point clouds into a plurality of groups based on the point cloud data. The processing unit 10 sets a color for each group to divide the subject into different colors. Each of the divided color regions is to be a color element CE. The effect processing unit 13 performs occlusion processing based on the point cloud data.

FIG. 14 illustrates an effect of displaying an AR object AROB having a box shape in front of a real object ROB. The coordinates of the AR object AROB are set based on the coordinates of the real object ROB measured using the ToF sensor 30. With this setting, the relative position between the AR object AROB and the real object ROB is controlled with high accuracy. This leads to appropriate execution of occlusion processing of the real object ROB by the AR object AROB.

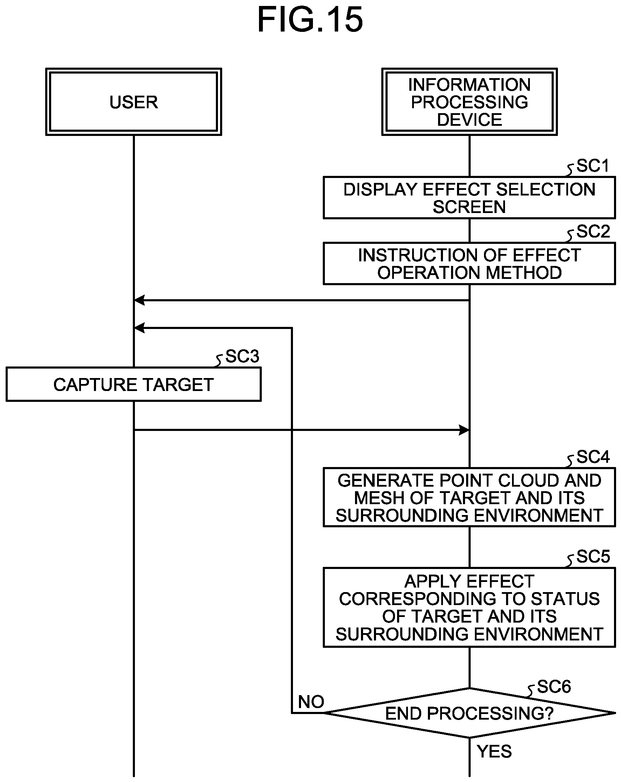

FIG. 15 is a diagram illustrating another example of information processing performed by the information processing device 1. Steps SC1, SC2, and SC6 are similar to Steps SA1, SA2, and SA9 illustrated in FIG. 10, respectively. Therefore, differences from the processing flow of FIG. 10 will be mainly described.

When the operation description of the effect in Step SC2 ends, the user captures the target TG, which an application target of the effect, in the visual field of the camera 20 in Step SC3.

In Step SC4, the effect processing unit 13 generates point cloud data and mesh data of the target TG and its surrounding environment. The mesh data is coordinate data of vertices, sides, and faces for generating a polygon mesh.

In Step SC5, the effect processing unit 13 detects the target TG that is the subject and its surrounding environment. The effect processing unit 13 independently applies an effect to the target TG and the surrounding environment depending on the detected situation. Examples of the situation to be detected include the shape, pose, location, distance from the ToF sensor 30, and the like of the subject.

In Step SC6, the processing unit 10 determines the end of the effect. In a case where it is determined in Step SC6 that the effect is ending (Step SC6: Yes), the processing unit 10 ends the processing of the effect. In a case where it is not determined in Step SC6 that the effect is ending (Step SC6: No), the processing returns to Step SC3, and the above-described processing is repeated until the end flag is detected.

### [3. Hardware configuration example]

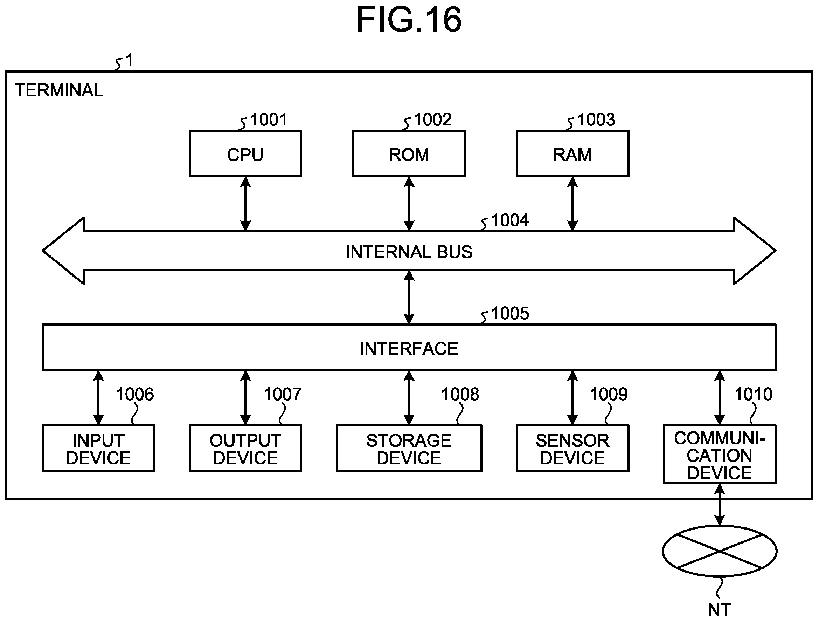

FIG. 16 is a diagram illustrating an example of a hardware configuration of the information processing device 1.

The information processing device 1 includes a central processing unit (CPU) 1001, read only memory (ROM) 1002, random access memory (RAM) 1003, an internal bus 1004, an interface 1005, an input device 1006, an output device 1007, a storage device 1008, a sensor device 1009, and a communication device 1010.

The CPU 1001 is configured as an example of the processing unit 10. The CPU 1001 functions as an arithmetic processing device and a control device, and controls the overall operation in the information processing device 1 according to various programs. The CPU 1001 may be a microprocessor.

The ROM 1002 stores programs and calculation parameters used by the CPU 1001. The RAM 1003 temporarily stores a program used in the execution of the CPU 1001, parameters that change appropriately in the execution, or the like. The CPU 1001, the ROM 1002, and the RAM 1003 are mutually connected by an internal bus 1004 including a CPU bus and the like.

The interface 1005 connects the input device 1006, the output device 1007, the storage device 1008, the sensor device 1009, and the communication device 1010 to the internal bus 1004. For example, the input device 1006 exchanges data with the CPU 1001 and the like via the interface 1005 and the internal bus 1004.

The input device 1006 includes: an input means for a user to input information, such as a touch panel, a button, a microphone, and a switch; and an input control circuit that generates an input signal based on an input by the user and outputs the generated input signal to the CPU 1001. By operating the input device 1006, the user can input various data to the information processing device 1 and give an instruction on the processing operation.

The output device 1007 includes a display 50 and a sound output device such as a speaker and a headphone. For example, the display 50 displays a video image captured by the camera 20, a video image generated by the processing unit 10, and the like. The voice output device converts sound data or the like into a sound and outputs the obtained sound.

The storage device 1008 includes an effect information storage unit 60, a gesture model storage unit 70, and a program storage unit 80. The storage device 1008 includes a storage medium, a recording device that records data on the storage medium, a reading device that reads data from the storage medium, a deleting device that deletes the data recorded on the storage medium, and the like. The storage device 1008 stores a program 81 executed by the CPU 1001, various data, or the like.

The sensor device 1009 includes a camera 20, a ToF sensor 30, and an IMU 40, for example. The sensor device 1009 may include a global positioning system (GPS) reception function, a clock function, an acceleration sensor, a gyroscope, an atmospheric pressure sensor, a geomagnetic sensor, and the like.

The communication device 1010 is a communication interface including a communication device or the like for connecting to a communication network NT. The communication device 1010 may be a wireless LAN compatible communication device or a Long Term Evolution (LTE) compatible communication device.

### [4. Effects]

The information processing device 1 includes the position information detection unit 11, the effect processing unit 13, and the display 50. The position information detection unit 11 detects distance information of the real object ROB based on the depth data acquired by the ToF sensor 30. Based on the distance information of the detected real object ROB, the effect processing unit 13 performs occlusion processing regarding the real object ROB and the AR object AROB generated by the CG. The display 50 displays a result of the occlusion processing. With the information processing method of the present embodiment, the processing of the information processing device 1 described above is executed by a computer. The non-volatile storage medium (program storage unit 80) of the present embodiment stores the program 81 that causes the computer to execute the processing of the information processing device 1 described above.

With this configuration, the positional relationship between the real object ROB and the AR object AROB is accurately detected based on the depth data. The occlusion processing can be appropriately performed, making it possible to provide the viewer with a video image with a reduced sense of incompatibility.

The information processing device 1 includes the trigger detection unit 14. Based on the depth data, the trigger detection unit 14 detects a trigger for starting processing of an effect using the AR object AROB.

According to this configuration, the trigger is accurately detected.

The trigger detection unit 14 detects a gesture of the trigger object TOB as a trigger.

With this configuration, an effect can be started using a gesture.

The trigger detection unit 14 includes the depth map generation unit 141, the joint information detection unit 142, the motion detection unit 143, and the determination unit 144. The depth map generation unit 141 generates the depth map DM of the trigger object TOB at a plurality of time points using the depth data. The joint information detection unit 142 detects the joint information of the trigger object TOB at the plurality of time points based on the depth map DM at the plurality of time points. The motion detection unit 143 detects the motion of the trigger object TOB based on the joint information at a plurality of time points. The determination unit 144 determines whether the motion of the trigger object TOB corresponds to a gesture to be a trigger.

With this configuration, the gesture is accurately detected.

The information processing device 1 includes the orientation detection unit 12. The orientation detection unit 12 detects the orientation of the camera 20. Based on the orientation of the camera 20, the effect processing unit 13 adjusts the position where the effect using the AR object AROB is applied to the video image CM of the camera 20.

This configuration makes it possible to apply the effect to an appropriate position even when there is change in the orientation of the camera 20.

The effects described in the present specification are merely examples, and thus, there may be other effects, not limited to the exemplified effects.

### [Supplementary notes]

Note that the present technique can also have the following configurations.
(1) An information processing method to be executed by a computer, the method comprising:
   detecting distance information of a real object based on depth data acquired by a ToF sensor;
   performing occlusion processing on the real object and an AR object generated by CG based on the distance information of the real object detected; and
   displaying a result of the occlusion processing on a display.
(2) An information processing device comprising:
   a position information detection unit that detects distance information of a real object based on depth data acquired by a ToF sensor;
   an effect processing unit that performs occlusion processing on the real object and an AR object generated by CG based on the distance information of the real object detected; and
   a display that displays a result of the occlusion processing.
(3) The information processing device according to (2), further comprising
   a trigger detection unit that detects a trigger for starting processing of an effect using the AR object based on the depth data.
(4) The information processing device according to (3),
   wherein the trigger detection unit detects a gesture of a trigger object as the trigger.
(5) The information processing device according to (4),
   wherein the trigger detection unit comprises:
   a depth map generation unit that generates a depth map of the trigger object at a plurality of time points using the depth data;
   a joint information detection unit that detects joint information of the trigger object at a plurality of time points based on the depth map at the plurality of time points; and
   a motion detection unit that detects a motion of the trigger object based on joint information at the plurality of time points; and
   a determination unit that determines whether the motion of the trigger object corresponds to the gesture to be the trigger.
(6) The information processing device according to any one of (2) to (5), further comprising
   an orientation detection unit that detects an orientation of a camera,
   wherein the effect processing unit adjusts a position at which an effect using the AR object is applied to a video image obtained by the camera, based on the orientation of the camera.
(7) The information processing device according to any one of (2) to (6),
   wherein the effect processing unit generates point cloud data of a subject based on the depth data, and performs the occlusion processing based on the point cloud data.
(8) The information processing device according to any one of (2) to (7),
   wherein in a case where the real object is closer to the ToF sensor than the AR object is, the effect processing unit superimposes the real object in front of the AR object so that the AR object is hidden by the real object, as the occlusion processing.
(9) The information processing device according to any one of (2) to (7),
   wherein in a case where the AR object is closer to the ToF sensor than the real object is, the effect processing unit superimposes the AR object in front of the real object so that the real object is hidden by the AR object, as the occlusion processing.
(10) A non-volatile storage medium storing a program that causes a computer to execute processing comprising:
   detecting distance information of a real object based on depth data acquired by a ToF sensor;
   performing occlusion processing on the real object and an AR object generated by CG based on the distance information of the real object detected; and
   displaying a result of the occlusion processing on a display.

### Reference Signs List

- 1: INFORMATION PROCESSING DEVICE
- 11: POSITION INFORMATION DETECTION UNIT
- 12: ORIENTATION DETECTION UNIT
- 13: EFFECT PROCESSING UNIT
- 14: TRIGGER DETECTION UNIT
- 141: DEPTH MAP GENERATION UNIT
- 142: JOINT INFORMATION DETECTION UNIT
- 143: MOTION DETECTION UNIT
- 144: DETERMINATION UNIT
- 20: CAMERA
- 30: ToF SENSOR
- 50: DISPLAY
- 80: PROGRAM STORAGE UNIT (NON-VOLATILE STORAGE MEDIUM)
- 81: PROGRAM

- AROB: AR OBJECT
- CM: VIDEO IMAGE
- DM: DEPTH MAP
- ROB: REAL OBJECT
- TOB: TRIGGER OBJECT

## Claims

1. An information processing method to be executed by a computer, the method comprising:
detecting distance information of a real object based on depth data acquired by a ToF sensor;
performing occlusion processing on the real object and an AR object generated by CG based on the distance information of the real object detected; and
displaying a result of the occlusion processing on a display.

2. An information processing device comprising:
a position information detection unit that detects distance information of a real object based on depth data acquired by a ToF sensor;
an effect processing unit that performs occlusion processing on the real object and an AR object generated by CG based on the distance information of the real object detected; and
a display that displays a result of the occlusion processing.

3. The information processing device according to claim 2, further comprising
a trigger detection unit that detects a trigger for starting processing of an effect using the AR object based on the depth data.

4. The information processing device according to claim 3,
wherein the trigger detection unit detects a gesture of a trigger object as the trigger.

5. The information processing device according to claim 4,
wherein the trigger detection unit comprises:
a depth map generation unit that generates a depth map of the trigger object at a plurality of time points using the depth data;
a joint information detection unit that detects joint information of the trigger object at a plurality of time points based on the depth map at the plurality of time points; and
a motion detection unit that detects a motion of the trigger object based on joint information at the plurality of time points; and
a determination unit that determines whether the motion of the trigger object corresponds to the gesture to be the trigger.

6. The information processing device according to claim 2, further comprising
an orientation detection unit that detects an orientation of a camera,
wherein the effect processing unit adjusts a position at which an effect using the AR object is applied to a video image obtained by the camera, based on the orientation of the camera.

7. The information processing device according to claim 2,
wherein the effect processing unit generates point cloud data of a subject based on the depth data, and performs the occlusion processing based on the point cloud data.

8. The information processing device according to claim 2,
wherein in a case where the real object is closer to the ToF sensor than the AR object is, the effect processing unit superimposes the real object in front of the AR object so that the AR object is hidden by the real object, as the occlusion processing.

9. The information processing device according to claim 2,
wherein in a case where the AR object is closer to the ToF sensor than the real object is, the effect processing unit superimposes the AR object in front of the real object so that the real object is hidden by the AR object, as the occlusion processing.

10. A non-volatile storage medium storing a program that causes a computer to execute processing comprising:
detecting distance information of a real object based on depth data acquired by a ToF sensor;
performing occlusion processing on the real object and an AR object generated by CG based on the distance information of the real object detected; and
displaying a result of the occlusion processing on a display.
